Europäisches Patentamt

European Patent Office

Office européen des brevets

(11) Veröffentlichungsnummer: **0 124 837**
**A1**

(12) **EUROPÄISCHE PATENTANMELDUNG**

(21) Anmeldenummer: 84104778.0

㉒ Anmeidetag: 27.04.84

(51) Int. Cl.³: **A 01 D 78/12**

(30) Priorität: 05.05.83 DE 3316413
03.04.84 DE 3412491

(43) Veröffentlichungstag der Anmeldung:
14.11.84 Patentblatt 84/46

(84) Benannte Vertragsstaaten:
AT BE CH DE FR GB IT LI NL SE

(71) Anmelder: Alois Pöttinger Maschinenfabrik GmbH

A-4710 Grieskirchen(AT)

(72) Erfinder: Frauscher, Josef

A-4942 Gurten 50(AT)

(74) Vertreter: Dupal, Helmut, Dipl-Ing.
Jägerweg 12
A-4702 Wallern(AT)

(54) Heuwerbungsmaschine zum Zetten und Schwaden.

㊳ Heuwerbungsmaschine zum Zetten und Schwaden mit wenigstens zwei, um aufrechte Achsen angetrieben umlaufenden Rechrädern, deren Recharme (14) in Rechradlagern (27) um ihre Längsachse (5) verdrehbar und mit Schwenklagern (25) an Schwenkachsen (24) in Schwad- oder Zettstellung verschwenkbar sind, bei denen Steuerhebel (30) mit Steuerrollen (29) dauernd an Steuerbahnen (45) geführt sind und an Lagerteilen (33), die an den Schwenkachsen (24) befestigt sind schwenkbar gelagert sind. Die Recharme (14) sind mit Steuergabeln (35) versehen, zwischen denen die Steuerhebel (30) geführt sind, wobei an den Steuergabeln (35) Halterungen (41) angebracht sind, die in Zettstellung der Recharme (14) mit den Lagerteilen (33) verbunden, die Verschwenkbarkeit der Recharme (14) um ihre Längsachse (15) aufheben.

Fig. 3

EP 0 124 837 A1

0124837

Alois Pöttinger
Maschinenfabrik Gesellschaft m.b.H.
A-4710 Grieskirchen                    EM 17 038 Z

Heuwerbungsmaschine zum Zetten und Schwaden

Beschreibung

Die Erfindung betrifft eine Heuwerbungsmaschine zum Zetten und Schwaden mit zwei oder mehreren, um aufrechte, stillstehende Rechradachsen angetrieben umlaufenden Rechrädern, an denen Recharme, die an ihren äußeren Enden Rechzinken tragen, in Recharmlagern, um ihre Längsachsen verdrehbar gelagert befestigt sind, mit Schwenklagern verbunden an Schwenkachsen der Rechräder in Schwad-oder Zettstellung verschwenkbar und in diesen Stellungen verriegelbar angebracht und mit an einer Steuerbahn mit Hilfe von Steuerrollen dauernd radial verschwenkbar geführten Steuerhebeln beim Schwaden über einen Teilbereich ihres Umlaufes nach oben und entgegen die Drehrichtung des Rechrades schwenkbar gesteuert sind.

Bei Maschinen dieser Art ist es bekannt, die an Steuerhebeln gelagerten Steuerrollen nur während der Schwadstellung in der Steuerbahn zu führen und bei der Umstellung der Recharme für die Zettarbeit aus der Steuerbahn herauszuführen.

0124837

Dabei ergeben sich Schwierigkeiten bei der Führung der Steuerrollen aus und in die Steuerbahn, weil in bestimmten Stellungen der Steuerhebel sehr geringe Steuerwege zur Verfügung stehen und weil bei ungenügender Wartung oder unsachgemäßer Bedienung Fehlschaltungen vorkommen, die zu Schäden führen können. Besonders anfällig für solche Fehler sind Konstruktionen mit zentraler Verstellung der Recharme.

Ein anderer Weg wird in der DEOS 26 19 867 angegeben. Bei dieser Lösung verbleiben die Steuerrollen in der Steuerbahn und sind nur in Schwadstellung der Recharme mit diesen auf Mitnahme geschaltet. Diese Lösung macht jedoch ein aufwendiges Gelenk zwischen Steuerhebel und Recharm einerseits und zwischen diesem Gelenk und dem unverschwenkbaren Teil des Rechrades andererseits erforderlich. Dies zwingt zur Anwendung von Kreuzgelenken oder funktionsähnlichen Elementen hoher Präzision auf engstem Raum, die unter den sehr rauhen Arbeitsbedingungen , denen eine Landmaschine ausgesetzt ist, nicht versagen dürfen. Die Herstellung einer preiswerten Lösung ist insofern unmöglich gemacht.

Aus der DEOS 29 46 034 ist eine Lösung bekannt geworden, bei der die Steuerkurve oberhalb der Recharme angeordnet ist und bei der die Steuerhebel über Kugelzapfen in der Steuerbahn dauernd geführt sind. Die Steuerhebel sind mit den Recharmen über einfache Gelenke verbunden und die Recharme sind über Kugelzapfen in Radialschlitzführungen an einem mit dem unverschwenkbaren Teil des Rechrades verbundenen Teil geführt. Da die Recharme in beiden Arbeits - stellungen in senkrechter Lage zur Rechradachse verbleiben, werden sie in der Zettstellung gegen Verdrehung gesichert, in Schwadstellung aber freigegeben.

Die Steuerhebel sind an den Steuerarmen in der Weise angelenkt, daß sie in der Zettstellung derselben in Radialebenen des Rechrades frei schwenkbar sind und nur in Schwadstellung die Recharme zur Steuerbewegung mitnehmen.

Der Nachteil dieser Anordnung besteht einerseits in den Kugelzapfenführungen, die im praktischen Betrieb nicht entsprechen, in den sehr großen Schwenklagerdurchmessern, durch welche die Steuerhebel hindurchgeführt sind, um den nötigen Schwenkwinkel von wenigstens 60° zur Verfügung zu haben und in den zwangsläufig senkrecht zur Rechradachse angeordneten Recharmen, was die Zettwirkung herabsetzt oder zu Kompromissen hinsichtlich Leistung und Qualität der Schwad- und Zettarbeit zwingt, weil beim Zetten ein Wurfwinkel von 10-15° zur Verfügung stehen muß und die Rechzinken dementsprechend angeordnet sein müssen, daß sie in beiden Raumlagen die von ihnen geforderte Arbeit zur Zufriedenheit erfüllen.
Überdies ist bei dieser Anordnung die Anbringung einer zentralen Verstellung für die Recharme kaum möglich.

Die Aufgabe der Erfindung besteht nun darin, eine Heuwerbungsmaschine der eingangs genannten Gattung vorzuschlagen, bei der geringe Anforderungen an die Präzision der Herstellung und die Qualität der Wartung und Bedienung gestellt werden können, ohne daß die Arbeitsqualität darunter leidet und die mit einfachen Mitteln bei der Steuerung der Maschine das Auslangen findet.

Erfindungsgemäß wird die Aufgabe dadurch gelöst, daß die mit den Steuerrollen an der Steuerbahn geführten Steuerhebel in an den Schwenkachsen befestigten Lagerteilen verschwenkbar gelagert sind und an den zur Rechradachse gerichteten Enden der Recharme Steuergabeln befestigt sind, in welchen die Steuerhebel geführt sind, wobei jeder Recharm in Zettstellung mit dem Rechrad zusätzlich über eine Halterung um seine Längsachse verdrehfest verbunden ist.

Auf diese Weise ist es möglich, daß bei der Herstellung der Maschine hinsichtlich der Steuerung weite Toleranzen zugelassen werden, wodurch eine preiswerte Fertigung möglich wird und daß die Bedienung an der Steuerung kaum Fehler und schlechte Wartung keine schweren oder aufwendig zu behebende Schäden hervorrufen können.

Besonders einfach gestaltet sich die Lagerung der Steuerhebel, wenn das Lagerteil am unteren Ende der Schwenkachse befestigt, mit zwei Seitenteilen versehen ist, zwischen denen ein Lagerbolzen angebracht ist, auf dem eine Lagerhülse drehbar gelagert ist, an welcher der Steuerhebel befestigt ist.

Eine einfache und zweckmäßige Halterung der Recharme in Zettstellung ergibt sich, wenn das zur Rechradachse gerichtete Ende jedes Recharmes mit einer Halterung versehen ist, in welche die Verlängerung des Lagerbolzens in Zettstellung des Recharmes eingreift.

Dabei ist die Ausgestaltung dadurch, daß die Halterung mit einer Ausnehmung versehen ist, deren Breite dem Durchmesser der Verlängerung des Lagerbolzens entspricht, besonders platz-und materialsparend.

Um Fehlschaltungen wegen etwa mangelnder Wartung hängengebliebener Recharme zu vermeiden ist es vorteilhaft, wenn die Halterung wenigstens an ihrem oberhalb der Ausnehmung gelegenen Teil mit einem Fortsatz versehen ist, der eine abgeschrägte, zur Ausnehmung hin verlaufende Auflauffläche für die Verlängerung des Lagerbolzens aufweist.

Eine besonders einfache Lösung ergibt sich dann dadurch, daß die Halterung an der Steuergabel befestigt oder mit dieser einstückig ausgebildet, seitlich im Abstand am Lagerteil entlanggeführt ist.

Besonders bewährt hat sich eine Gestaltung der Steuergabel bei der die beiden Zinken der Steuergabel etwa kreisförmig gestaltet um die Achse des Lagerbolzens herumgeführt sind und in jenem Bereich, in dem der Steuerhebel während der Schwadstellung des Recharmes zu liegen kommt einen Abstand voneinander aufweisen, der etwa dem Durchmesser des Steuerhebels entspricht, wobei zur Anpassung an die Steuerungsgeometrie die Steuergabel so zu formen ist, daß die, in Schwadstellung des Recharmes zur Rechradachse zu liegende innere Zinke der Steuergabel nach ihrem Ende zu seitlich abgebogen ist und die andere Zinke gerade verläuft, so daß der Abstand der beiden Zinken voneinander nach ihren Enden hin zunimmt.

Da die Umsteuerung nur bei eindeutig bestimmter Lage des Steuerhebels in Bezug auf den Recharm möglich ist, ist bei jeder Steueranordnung die Bedingung einzuhalten, daß der Steuerhebel an der Steuerbahn geführt, in jeder Stellung einen Winkel mit der Längsachse des Recharmes einschließt, der kleiner ist als ein gestreckter Winkel.

Wenn der Steuerhebel an der Steuerbahn geführt, in der Rechstellung des Recharmes beim Schwaden, eine parallele Lage zur Rechradachse einnimmt, ergibt sich eine besonders leichte Umstellbarkeit der Recharme von einer Arbeitsstellung in die andere und eine günstige Form der Steuerkurve.

Um auch bei Fehlbedienung die Umstellung aus der Zett- in die Schwadstellung und umgekehrt sicherzustellen, können an Gabelzinke und Halterung zusätzliche Führungen angebracht sein. Dadurch wird verhindert, daß bei gewaltsamen Verdrehen eines Recharmes in die falsche Richtung, die Steuerung behindert oder verkeilt wird.

Ein Ausführungsbeispiel der Erfindung wird nachstehend an Hand der Zeichnung näher erläutert.

In dieser zeigt

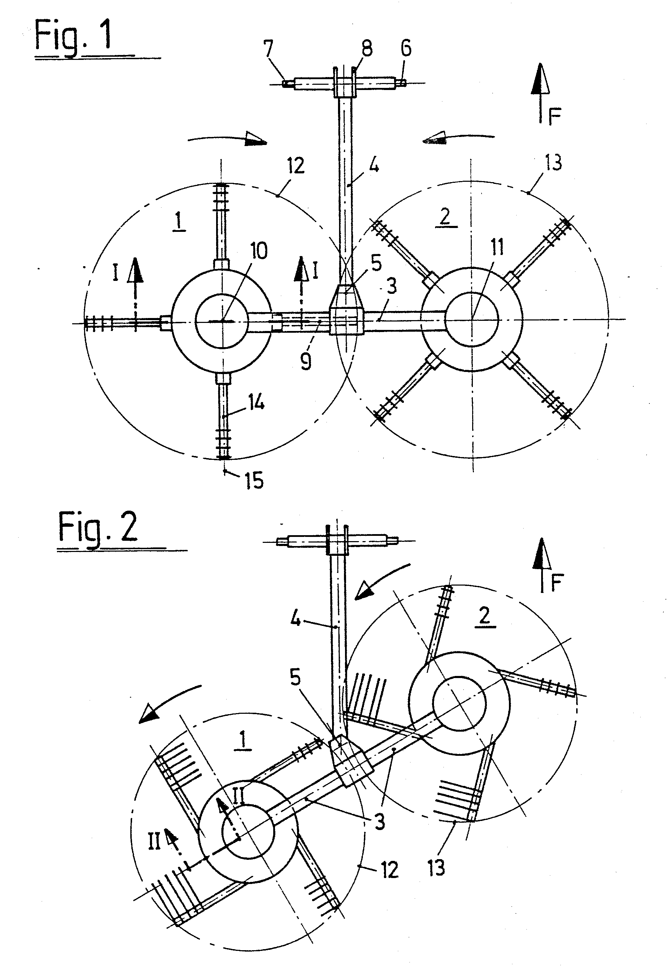

Fig.1    eine Draufsicht auf die Heuwerbungsmaschine in der Zettstellung der Rechräder,

Fig.2    eine Draufsicht auf die Heuwerbungsmaschine in der Schwadstellung der Rechräder,

Fig.3    einen Schnitt durch ein Rechrad nach Fig.1, I-I in der Zettstellung der Recharme im Aufriß,

Fig.4    einen Ausschnitt aus einem Rechrad nach Fig.2, II-II, in der Schwadstellung der Recharme im Aufriß,

Fig.5    einen Ausschnitt aus einem Rechrad nach Fig.1, I-II, in der Zettstellung der Recharme im Aufriß in Ansicht A und geschnitten,

Fig.6    eine Draufsicht auf eine Steuergabel mit Halterung, Einzeldarstellung aus Fig. 3,

Fig.7    eine Seitenansicht einer gegenüber Fig. 6 abgeänderten Steuergabel mit Halterung, Einzeldarstellung aus Fig. 3 und

Fig.8    eine Draufsicht auf die Steuergabel gemäß Fig.7, Einzeldarstellung aus Fig.3.

Die Heuwerbungsmaschine weist zwei Rechräder 1 und 2 auf, die an einem senkrecht zur Fahrtrichtung angeordneten Rahmenteil 3 antreibbar gelagert sind. Das Rahmenteil 3 ist mit dem Rahmen 4 um eine aufrechte Schwenkachse 5 schwenkbar verbunden. Der Rahmen 4 trägt an seinem vorderen Ende die beiden unteren Anlenkstücke 6,7 und die obere Anlenkstelle 8 für den Anbau an den Dreipunktanschluß eines Schleppers.

Die Rechräder sind für gemeinsamen, angetriebenen Umlauf durch die Welle 9 verbunden, die über ein nicht dargestelltes Getriebe mit Zapfwellenanschluß, von einem Schlepper aus antreibbar ist.

In der Zettstellung laufen die Rechräder 1 und 2 im entgegengesetzten Umlaufsinn um und die Rechradachsen 10 und 11 sind in Fahrtrichtung etwa 13° geneigt angeordnet. Gleichzeitig greifen die Rechkreise 12,13 durch die Vergrößerung ihres Durchmessers soweit ineinander, daß beim Zetten kein Mittelstreifen liegen bleibt.

In der Schwadstellung sind die Rechräder 1 und 2 mit dem Rahmenteil 3 um die etwa lotrechte Schwenkachse 5 zum Rahmen 4 verschwenkt, so daß sie schräg hintereinander laufen. Gleichzeitig ist in dieser Stellung die Drehrichtung des in Bezug auf die Fahrtrichtung F hinten liegenden Rechrades 1 umgekehrt und die Recharme 14, von denen an jedem Rechrad vier dargestellt sind - es können jedoch auch weniger oder mehr Recharme sein - sind in eine in Bezug auf die Rechradachse 10,11 mehr tangentiale Richtung verschwenkt, wodurch die Rechkreise 12,13 verkleinert werden, sodaß sie nicht mehr ineinandergreifen. In dieser Stellung sind die Recharme 14 um ihre Längsachse gesteuert verschwenkbar.

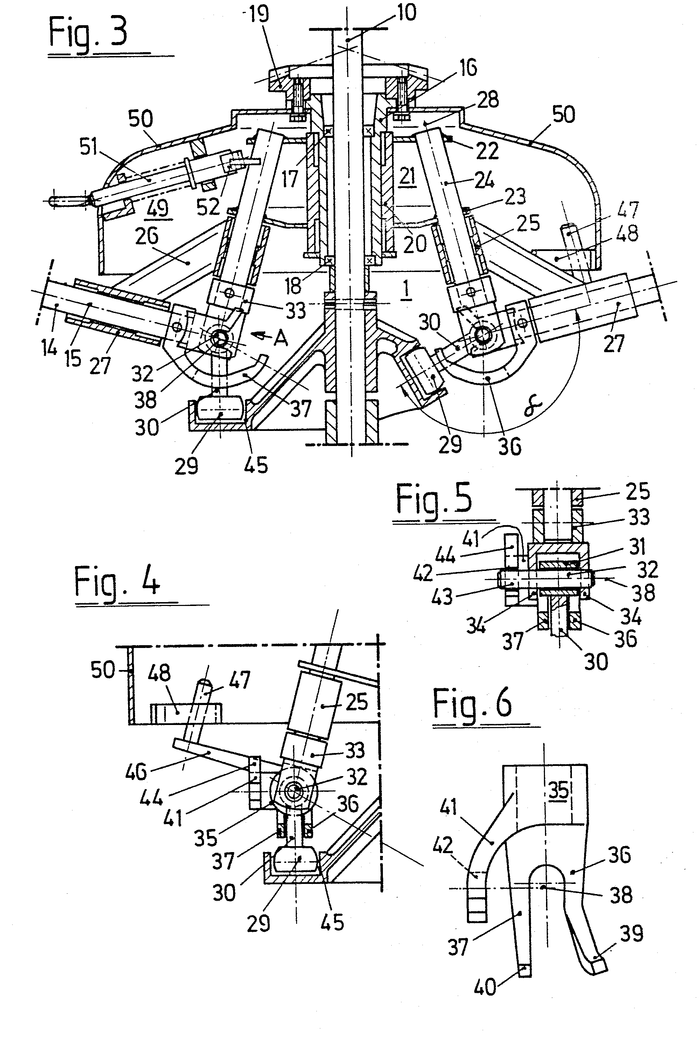

In Fig.3 und den folgenden Fig. 4, 5 und 6 ist eine Ausführungsform dargestellt, bei der eine Antriebsnabe 16 auf der Rechradachse 10 an zwei Stellen 17,18 gelagert und mit einem Antriebstellerrad 19 verschraubt ist, das mit einem nicht dargestellten Kegelrad kämmt, durch welches es mit einer - ebenfalls nicht dargestellten - Antriebswelle verbunden ist. Die Antriebsnabe 16 trägt ein Gehäuse 50, welches das Rechrad 1 überdeckt.

Auf der Antriebsnabe 16 ist die Rechradlagerhülse 20 der Rechradnabe 21 frei drehbar gelagert. Die Rechradnabe 21 weist ein oberes 22 und ein unteres Teller 23 auf, die mit der Rechradlagerhülse 20 verschweißt sind und in welche die Schwenkachsen 24 für die Rechradarme 14 mit einem Winkel zur Rechradachse 10 eingeschweißt sind, der mit dem Winkel der Rechradachse 10 zum Lot in der Zettstellung übereinstimmt.

An den Schwenkachsen 24 sind Schwenkteile 26 mit den Schwenkteillagerbüchsen 25 verschwenkbar gelagert. Der Schwenkwinkel beträgt etwa 90°.

Jeder Schwenkteil 26 ist an seinem unteren Teil mit einem Rechradtraglager 27 versehen, in dem ein Recharm 14 um seine Längsachse 15 verdrehbar gelagert ist, wobei der Winkel zwischen der Längsachse 15 und der geometrischen Achse 28 der Schwenkachse 24 90° beträgt.

Auf der Rechradachse 10 ist unterhalb der Antriebsnabe 16 eine Steuerbahn 45 verdrehfest angebracht, die in der dargestellten Ausführungsform mit zwei Laufbahnen ausgestattet ist, deren Verlauf einen Steuerweg in einer durch die Rechradachse 10 gelegten Radialebene bestimmt.

In der Steuerbahn 45 wird für jeden Recharm 14 eine Steuerrolle 29 geführt, die an einem Steuerhebel 30 gelagert ist, der seinerseits mit einer Lagerhülse 31 verschweißt ist, die auf einem Lagerbolzen 32 eines Lagerteiles 33 verschwenkbar gelagert ist. Der Lagerbolzen 32 ist dabei mit den Seitenteilen 34 des Lagerteiles 33 befestigt.

Das Lagerteil 33 ist am unteren Ende der Schwenkachse 24 derart verbolzt, daß der Steuerhebel 30 eine Lage einnimmt in der dieser in der vorgenannten Radialebene verschwenkbar ist, wobei der Winkel $\alpha$ zwischen der geometrischen

Achse 15 des Rechradarmes und dem Steuerhebel 30 in dessen am weitesten nach innen zur Rechradachse 10 gerichteten Lage stets kleiner ist als ein gestreckter Winkel. In der am weitesten nach außen gerichteten Lage kommt der Steuerhebel 30 - im vorliegenden Fall - mit der Rechradachse 10 gleichgerichtet zu liegen.

Mit dem inneren, zur Rechradachse 10 hin gerichteten Ende des Recharmes 14 ist eine Steuergabel 35 verbolzt, zwischen deren beiden Zinken 36 und 37 der Steuerhebel 30 geführt ist.

Die Zinken 36 und 37 der Steuergabel sind etwa in einem Kreisbogen um die Achse 38 des Lagerbolzens 32 herumge - führt. Im Bereich der Zinken 36,37 der Steuergabel 35 in dem der Steuerhebel 30 in der Schwadstellung des Recharmes zu liegen kommt, ist dieser eng zwischen den Zinken 36,37 geführt. Um die Umstellung von einer Arbeitsstellung in die andere zu ermöglichen, ist die in Schwadstellung des Recharmes 14 innere Zinke 36 nach ihrem Ende 39 zu seitlich abgebogen, während die äußere Zinke 37 gerade verläuft, so daß der Abstand der beiden Zinken 36,37 voneinander nach ihren Enden 39,40 hin zunimmt.

In Zettstellung muß die Verdrehbarkeit des Recharmes 14 um die Längsachse 15 aufgehoben sein. Dies wird durch eine Halterung 41 bewerkstelligt, die auf der Steuergabel 35 angebracht ist und im Bereich des Lagerbolzens 32 eine Ausnehmung 42 eingearbeitet hat, in welche eine Verlängerung 43 des Lagerbolzens 32 in der Zettstellung eingreift. Die Ausnehmung 42 ist an ihrem unteren Ende angeschrägt und weist am oberen einen Fortsatz 44 auf, mit einer schrägen, zur Ausnehmung 42 hin verlaufenden Einführungsbahn für die Verlängerung 43.

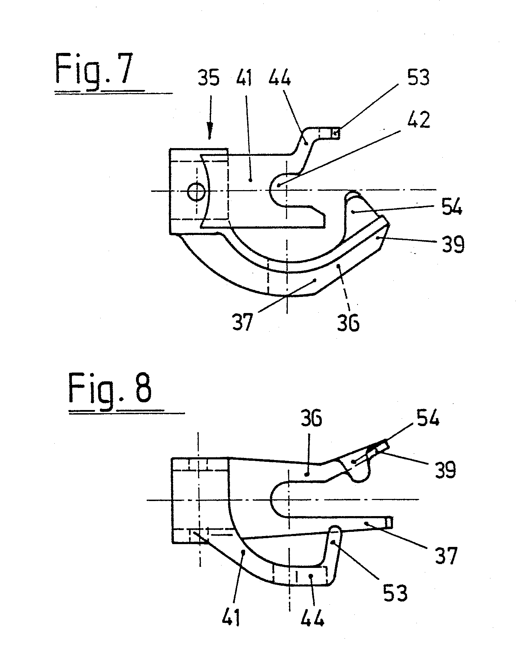

Bei einer Abänderung der Steuergabel 35 ist die innere Zinke 36 (Fig. 7 und 8) an ihrem Ende 39 mit einem Führungs - fortsatz 54 versehen, der nach oben und in Richtung auf die äußere Zinke 37 leicht gebogen verläuft und bei der Umstellung von der Zettstellung in die Schwadstellung und wenn der Steuerhebel 30 sich in der höchsten Steuerstellung befindet ein sicheres Übergreifen des Steuerhebels 30 und damit die Umstellung ohne Behinderung auch dann gewähr - leistet, wenn der Recharm 14 gewaltsam in die falsche Richtung verdreht wird.

Aus dem gleichen Grund ist für die Umstellung aus der Schwad-in die Zettstellung, wenn sich der Steuerhebel 30 in der höchsten Steuerstellung befindet, eine Querverlängerung 53 am Ende 39 des Fortsatzes 44 der Halterung 41 vorgesehen, die sich in Richtung auf das Innere der Steuergabel 35 und quer zum Fortsatz 44 und zu der Ausnehmung 42 der Halterung 41 erstreckt und die dabei stets die Verlängerung 43 des Lagerbolzens 32 übergreift, so daß die Einführung in die Ausnehmung 42 auch bei fehlerhafter Bedienung sicher erfolgt.

Zur Vereinfachung der Umstellung von einer Arbeitsstellung in die andere ist an jedem Schwenkteil 26 ein Schwenkhebel 46 angebracht, der mit einem nach oben gerichteten Schwenkzapfen 47 versehen ist, der in einer Führungstasche 48 geführt ist, die an einem Gehäuse 50 befestigt ist.

Die Kupplung zum Antriebsrad 16 und Rechrad 1 geschieht über eine Riegelvorrichtung 49, die im wesentlichen aus einem federbelasteten Riegel 51,der am Gehäuse 50 geführt ist und einer mit zwei Raststellen versehenen Rast 52 , die an der Rechradnabe 21 angebracht ist, besteht.

11

0124837

Verzeichnis der Bezugszeichen :

1 Rechrad
2 Rechrad
3 Rahmenteil
4 Rahmen
5 Schwenkachse
6 Anlenkstück
7 Anlenkstück
8 Anlenkstelle
9 Welle
10 Rechradachse des Rechrades 1
11 Rechradachse des Rechrades 2
12 Rechkreis
13 Rechkreis
14 Recharme
15 Längsachse des Recharmes
16 Antriebsnabe
17 Lagerstelle der Antriebsnabe
18 Lagerstelle der Antriebsnabe
19 Antriebstellerrad
20 Rechradlagerhülse
21 Rechradnabe
22 oberes Teller
23 unteres Teller
24 Schwenkachsen
25 Schwenkteillager
26 Schwenkteil
27 Recharmtraglager
28 geometrische Achse der Schwenkachse 24
29 Steuerrolle
30 Steuerhebel
31 Lagerhülse
32 Lagerbolzen
33 Lagerteil
34 Seitenteil

/2

0124837

35 Steuergabel

36 in Schwadstellung innere Zinke der Steuergabel 35

37 in Schwadstellung äußere Zinke der Steuergabel 35

38 Achse des Lagerbolzens 32

39 Ende der inneren Zinke 36

40 Ende der äußeren Zinke 37

41 Halterung

42 Ausnehmung

43 Verlängerung des Lagerbolzens 32

44 Fortsatz der Halterung 41

45 Steuerbahn

46 Schwenkhebel

47 Schwenkzapfen

48 Führungstasche

49 Riegelvorrichtung

50 Gehäuse

51 Riegel

52 Rast

$\alpha$ Winkel zwischen Längsachse 15 und Steuerhebel 30

53 Querverlängerung des Fortsatzes 44 der Halterung 41 54 Führungsfortsatz am Ende 39 der inneren Zinke 36

Patentansprüche :

1. Heuwerbungsmaschine zum Zetten und Schwaden mit zwei oder mehreren, um aufrechte, stillstehene Rechradachsen angetrieben umlaufenden Rechrädern, an denen Recharme, die an ihren äußeren Enden Rechzinken tragen, in Recharmlagern um ihre Längsachsen verdrehbar gelagert befestigt sind, mit Schwenklagern verbunden an Schwenkachsen der Rechräder in Schwad- oder Zettstellung verschwenkbar und in diesen Stellungen verriegelbar angebracht und mit an einer Steuerbahn mit Hilfe von Steuerrollen dauernd radialverschwenkbar geführten Steuerhebeln beim Schwaden über einen Teilbereich ihres Umlaufes nach oben und entgegen die Drehrichtung des Rechrades schwenkbar gesteuert sind, dadurch gekennzeichnet, daß die mit den Steuerrollen (29) an der Steuerbahn (45) geführten Steuerhebel (30) in an den Schwenkachsen (24) befestigten Lagerteilen (33) verschwenkbar gelagert sind und an den zur Rechradachse (10) gerichteten Enden der Recharme Steuergabeln (35) befestigt sind, in welchen die Steuerhebel (30) geführt sind, wobei jeder Recharm (14) in Zettstellung mit dem Rechrad (1,2) zusätzlich über eine Halterung (41) um seine Längsachse (15) verdrehfest verbunden ist.

2. Heuwerbungsmaschine nach Anspruch 1, dadurch gekennzeichnet, daß das am unteren Ende der Schwenkachse (24) angeordnete Lagerteil (33) mit zwei Seitenteilen (34) versehen ist, zwischen denen ein Lagerbolzen (32) angebracht ist, auf dem eine Lagerhülse (31) drehbar gelagert ist, an welcher der Steuerhebel (30) befestigt ist.

3. Heuwerbungsmaschine nach Anspruch 1 oder 2, dadurch ge - kennzeichnet, daß das zur Rechradachse (10) gerichtete Ende jedes Recharmes (14) mit einer Halterung (41) versehen ist, in welche die Verlängerung (43) des Lagerbolzens (32) in Zettstellung des Recharmes (14) eingreift.

4. Heuwerbungsmaschine nach Anspruch 3, dadurch gekennzeichnet, daß die Halterung (41) mit einer Ausnehmung (42) versehen ist, deren Breite dem Durchmesser der Verlängerung (43) des Lagerbolzens (32) entspricht.

5. Heuwerbungsmaschine nach Anspruch 1 bis 4, dadurch gekennzeichnet, daß die Halterung (41) an der Steuergabel (35) befestigt oder mit dieser einstückig ausgebildet, seitlich im Abstand am Lagerteil (33) entlanggeführt ist.

6. Heuwerbungsmaschine nach Anspruch 1 bis 5, dadurch gekennzeichnet, daß die Halterung (41) wenigstens an ihrem oberhalb der Ausnehmung (42) gelegenen Teil mit einem Fortsatz (44) versehen ist, der eine abgeschrägte, zur Ausnehmung (42) hin verlaufende Auflauffläche für die Verlängerung (43) des Lagerbolzens (32) aufweist.

7. Heuwerbungsmaschine nach Anspruch 1 bis 6, dadurch gekennzeichnet, daß die beiden Zinken (36, 37) der Steuergabel (35) etwa kreisbogenförmig gestaltet um die Achse (38) des Lagerbolzens (32) herumgeführt sind und in jenem Bereich, in dem der Steuerhebel (30) während der Schwadstellung des Recharmes (14) zu liegen kommt einen Abstand voneinander aufweisen, der etwa dem Durchmesser des Steuerhebels (30) entspricht.

8. Heuwerbungsmaschine nach Anspruch 1 bis 7, dadurch gekennzeichnet, daß die, in Schwadstellung des Recharmes (14) zur Rechradachse (10) zu liegende innere Zinke (36) der Steuergabel (35) nach ihrem Ende (39) zu seitlich abgebogen ist und die andere Zinke (37) gerade verläuft, sodaß der Abstand der beiden Zinken (36, 37) voneinander nach ihren Enden (39, 40) hin zunimmt.

9. Heuwerbungsmaschine nach Anspruch 1, dadurch gekennzeichnet, daß der Steuerhebel (35) an der Steuerbahn (45) geführt, in jeder Stellung einen Winkel ( $\alpha$ ) mit der Längsachse (15) des Recharmes (14) einschließt, der kleiner ist als ein gestreckter Winkel.

10. Heuwerbungsmaschine nach Anspruch 1 oder 9, dadurch gekennzeichnet, daß der Steuerhebel (30) an der Steuerbahn (45) geführt, in der Rechstellung des Recharmes (14) beim Schwaden, eine parallele Lage zur Rechradachse (10) einnimmt.

11. Heuwerbungsmaschine nach Anspruch 6, dadurch gekennzeichnet, daß der Fortsatz (44) der Halterung (41) an seinem Ende mit einer Querverlängerung (53) versehen ist, die in Richtung auf das Innere der Steuergabel (35) quer zum Verlauf des Fortsatzes (44) und der Ausnehmung (42) angeordnet ist.

12. Heuwerbungsmaschine nach Anspruch 8, dadurch gekennzeichnet, daß am Ende (39) der inneren Zinke (36) der Steuergabel (35) ein Führungsfortsatz (54) angebracht ist, der nach oben und in Richtung auf die äußere Zinke (37) leicht gebogen verlaufend ausgebildet ist.

**Fig. 1**

**Fig. 2**

0124837

## Fig. 3

19  10
50  16
51  28
49  22
52  24
17  23
26  25
21  47
20  48
18
33  1
30
14  15  27  32  38  30  29  45  37  29  36

## Fig. 5

25
41  33
44  31
42  32
43  38
34  34
37  36
30

## Fig. 4

50
48  47
25
46  33
44  32
41  36
35
37
30  45
29

## Fig. 6

41  35
42  36
38
37  39
40

Fig. 7

35  41  44       53

42

54

39

37      36

Fig. 8

36       54

39

37

41    44    53

Europäisches
Patentamt

## EUROPÄISCHER RECHERCHENBERICHT

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | FR-A-2 452 866 (KUHN S.A.) * Figuren 3-6; Seite 5, Zeile 29 - Seite 6, Zeile 24 * | 1,3,6 | A 01 D 78/12 |
| | --- | | |
| A | FR-A-2 442 004 (BUCHER-GUYER) & DE - A - 2946034 (Cat. D) * Figuren 1-4; Seite 5, Zeile 23 - Seite 7, Zeile 10 * | 1,9 | |
| | --- | | |
| D,A | DE-A-2 619 867 (KUHN S.A.) * Figuren 7-12,16-19; Seite 16, Zeile 16 - Seite 19, Zeile 8 * | 1 | |
| | --- | | |
| A | FR-A-2 329 185 (REBER) * Figuren 1-4; Seite 3, Zeile 19 - Seite 5, Zeile 5 * | 1 | |
| | --- | | RECHERCHIERTE SACHGEBIETE (Int. Cl. ³) |
| A | GB-A-2 077 561 (ALOIS POTTINGER) | | A 01 D |
| | ----- | | |

Der vorliegende Recherchenbericht wurde für alle Patentansprüche erstellt.

| Recherchenort | Abschlußdatum der Recherche | Prüfer |
|---|---|---|
| DEN HAAG | 15-08-1984 | DISSEN H.D. |